# EUROPÄISCHE PATENTSCHRIFT

(11) **EP 2 291 424 B1**
(45) Veröffentlichungstag und Bekanntmachung des Hinweises auf die Patenterteilung: **22.02.2012**
(21) Anmeldenummer: 09769131.5
(22) Anmeldetag: 12.06.2009
(51) Int. Cl.: C08G 18/18, C08G 18/42, C08G 18/79, C09D 175/06

(54) **HOCHREAKTIVE, URETDIONGRUPPEN HALTIGE POLYURETHANZUSAMMENSETZUNGEN, DIE METALLFREIE ACETYLACETONATE ENTHALTEN**
HIGH-REACTIVITY, URETDIONE-CONTAINING POLYURETHANE COMPOSITIONS WHICH COMPRISE METAL-FREE ACETYLACETONATES
COMPOSITIONS DE POLYURÉTHANE HAUTEMENT RÉACTIVES CONTENANT DES GROUPES URETDIONE, QUI CONTIENNENT DES ACÉTONATES D ACÉTYLE EXEMPTS DE MÉTAL

(30) Priorität: 27.06.2008 DE 102008002703
(43) Veröffentlichungstag der Anmeldung: 09.03.2011
(73) Patentinhaber: Evonik Degussa GmbH, 45128 Essen (DE)
(72) Erfinder: SPYROU, Emmanouil, 46514 Schermbeck (DE)
(86) Internationale Anmeldenummer: PCT/EP2009/057260
(87) Internationale Veröffentlichungsnummer: WO 2009/156282

(56) Entgegenhaltungen:
- EP-A- 1 878 493
- US-A1- 2005 096 451

## Beschreibung

Die Erfindung betrifft hochreaktive, Uretdiongruppen haltige Polyurethanzusammensetzungen, die bei niedrigen Einbrenntemperaturen aushärten, ein Verfahren zur Herstellung sowie deren Verwendung zur Herstellung von Beschichtungsmitteln, insbesondere Lackbeschichtungen und Klebstoffen sowie Kunststoffen.

Extern oder intern blockierte Polyisocyanate stellen wertvolle Vernetzer für thermisch vernetzbare Polyurethan (PUR)-Lack- und Klebstoffzusammensetzungen dar.

So beschreibt z. B. die DE-OS 27 35 497 PUR-Lacke mit hervorragender Witterungs- und Wärmestabilität. Die Vernetzer, deren Herstellung in der DE-OS 27 12 931 beschrieben wird, bestehen aus mit ε-Caprolactam blockiertem, Isocyanuratgruppen enthaltendem Isophorondiisocyanat. Es sind auch Urethan-, Biuret- oder Harnstoffgruppen haltige Polyisocyanate bekannt, deren Isocyanatgruppen ebenfalls blockiert sind.

Der Nachteil dieser extern blockierten Systeme besteht in der Abspaltung des Blockierungsmittels während der thermischen Vernetzungsreaktion. Da das Blockierungsmittel somit in die Umwelt emittieren kann, müssen aus ökologischen und arbeitshygienischen Gründen besondere Vorkehrungen zur Reinigung der Abluft und Wiedergewinnung des Blockierungsmittels getroffen werden. Zudem weisen die Vernetzer eine geringe Reaktivität auf. Es sind Härtungstemperaturen oberhalb von 170 °C erforderlich.

Die DE-OS 30 30 539 und DE-OS 30 30 572 beschreiben Verfahren zur Herstellung von Uretdiongruppen haltigen Polyadditionsverbindungen, deren terminale Isocyanatgruppen mit Monoalkoholen oder Monoaminen irreversibel blockiert sind. Nachteilig sind insbesondere die Ketten abbrechenden Bestandteile der Vernetzer, die zu geringen Netzwerkdichten der PUR-Lackbeschichtungen und damit zu mäßigen Lösemittelbeständigkeiten führen.

Hydroxylgruppen terminierte, Uretdiongruppen haltige Polyadditionsverbindungen sind Gegenstand der EP 0 669 353. Sie weisen aufgrund ihrer Funktionalität von zwei eine verbesserte Resistenz gegenüber Lösemitteln auf. Den Zusammensetzungen auf Basis dieser Uretdiongruppen haltigen Polyisocyanate ist gemeinsam, dass sie bei der Härtungsreaktion keine flüchtigen Verbindungen emittieren. Allerdings liegen die Einbrenntemperaturen mit mindestens 180 °C auf hohem Niveau.

Der Einsatz von Amidinen als Katalysatoren in PUR-Lackzusammensetzungen wird in der EP 0 803 524 beschrieben. Diese Katalysatoren führen zwar zu einer Erniedrigung der Aushärtungstemperatur, zeigen aber eine beträchtliche Vergilbung, die im Beschichtungsbereich allgemein unerwünscht ist. Ursache dieser Vergilbung sind vermutlich die reaktiven Stickstoffatome in den Amidinen. Diese können sich mit Luftsauerstoff zu N-Oxiden umsetzen, die für die Verfärbung verantwortlich sind.

In der EP 0 803 524 werden auch andere Katalysatoren erwähnt, die bislang für diesen Zweck verwendet wurden, ohne aber eine besondere Wirkung auf die Aushärtetemperatur zu zeigen. Dazu gehören die aus der Polyurethan-Chemie bekannten metallorganischen Katalysatoren, wie z. B. Dibutylzinndilaurat (DBTL), oder aber tertiäre Amine, wie z. B. 1,4-Diazabicylco[2.2.2]octan (DABCO).

In der WO 00/34355 werden Katalysatoren auf der Basis von Metallacetylacetonaten, z. B. Zinkacetylacetonat, beansprucht. Solche Katalysatoren sind tatsächlich in der Lage, die Aushärtungstemperatur von Uretdiongruppen haltigen Polyurethan-Pulverlackzusammensetzungen zu erniedrigen. (M. Gedan-Smolka, F. Lehmann, D. Lehmann "New catalysts for the low temperature curing of uretdione powder coatings" International Waterbome, High solids and Powder Coatings Symposium, New Orleans, 21 - 23. 2. 2001). Der Einsatz von Metallen in Gegenständen des täglichen Gebrauchs gerät aber aus toxikologischen Gründen immer mehr in die Kritik, vgl. die Entwicklung von Tributylzinnkatalysatoren.

Aufgabe der vorliegenden Erfindung war es daher hochreaktive Uretdiongruppen haltige Polyurethanzusammensetzungen zu finden, die sich bereits bei sehr niedrigen Temperaturen aushärten lassen und sich insbesondere zur Herstellung von Kunststoffen sowie von hochglänzenden oder matten, licht- und wetterstabilen hochreaktiven Beschichtungen, insbesondere für Lack- und Klebstoffzusammensetzungen, eignen. Dabei sollen aus toxikologischen und arbeitshygienischen Gründen aber keine Übergangsmetalle Verwendung finden. Außerdem müssen die Polyurethanzusammensetzungen nach Aushärtung gute lacktechnische Eigenschaften aufweisen.

Überraschend wurde gefunden, dass die erfindungsgemäßen rein organischen Katalysatoren die Rückspaltung von Uretdiongruppen so stark beschleunigen, so dass sich bei Verwendung Uretdiongruppen haltiger Komponenten die Aushärtetemperatur von Polyurethanzusammensetzungen beträchtlich erniedrigen lässt.

Herkömmliche Uretdiongruppen haltige Lack- bzw. Klebstoffzusammensetzungen lassen sich unter normalen Bedingungen (DBTL-Katalyse) erst ab 180 °C aushärten (Pieter Gillis de Lange, Powder Coatings and Technology, Vincentz Verlag, 2004, Kap. 3.3.2.2 S. 119).

Mit Hilfe der erfindungsgemäßen hochreaktiven und somit bei Niedrigtemperatur härtenden Polyurethanzusammensetzungen kann bei 100 bis 160 °C Aushärtungstemperatur nicht nur Energie und Aushärtungszeit gespart werden, sondern es lassen sich auch viele temperatursensible Substrate beschichten bzw. verkleben, die bei 180 °C unerwünschte Vergilbungs-, Zersetzungs- und/oder Versprödungserscheinungen zeigen würden. Neben Metall, Glas, Holz, Leder, Kunststoffen und MDF-Platten sind auch bestimmte Aluminiumuntergründe prädestiniert. Bei letzteren führt eine zu hohe Temperaturbelastung mitunter zu einer unerwünschten Änderung der Kristallstruktur.

Gegenstand der vorliegenden Erfindung sind hochreaktive uretdiongruppenhaltige Polyurethanzusammensetzungen, enthaltend
A) mindestens eine Uretdiongruppen haltigen Verbindung, basierend auf aliphatischen, (cyclo)aliphatischen und/oder cycloaliphatischen Polyisocyanaten und Hydroxylgruppen haltigen Verbindungen, mit einem freien NCO-Gehalt von kleiner 5 Gew.-% und einem Uretdiongehalt von 2 bis 25 Gew.-% in einer Menge von 5 bis 99 Gew.-% bezogen auf die Gesamtmasse der Komponenten
   und
B) mindestens einen Katalysator ausgewählt aus einem quarternären Ammoniumacetylacetonat und/oder Phoshphoniumacetylacetonat, in einer Menge von 0,2 bis 5 Gew.-% bezogen auf die Gesamtmasse der Komponenten,
C) gegebenenfalls ein Hydroxylgruppen haltiges Polymer mit einer OH-Zahl zwischen 20 und 500 mg KOH/Gramm in einer Menge von 1 bis 90 Gew.-% bezogen auf die Gesamtmasse der Komponenten;
D) gegebenenfalls mindestens eine gegenüber Säuregruppen reaktive Verbindung mit einem Gewichtsanteil, bezogen auf die Gesamtmasse der Komponenten, von 0,1 bis 10 %;
E) gegebenenfalls mindestens eine Säure in monomerer oder polymerer Form in einem Gewichtsanteil, bezogen auf die Gesamtmasse der Komponenten, von 0,1 bis 10 %;
F) gegebenenfalls Lösemittel;
G) gegebenenfalls Hilfs- und Zusatzstoffe.

Gegenstand der Erfindung ist auch ein Verfahren zur Herstellung von Polyurethanzusammensetzungen in beheizbaren Aggregaten bei Temperaturen unterhalb von 130 °C.

Gegenstand der Erfindung ist auch die Verwendung der erfindungsgemäßen Polyurethanzusammensetzungen zur Herstellung von Lackzusammensetzungen auf Metall-, Kunststoff-, Glas-, Holz-, MDF- (Middle Density Fiber Boards) oder Ledersubstraten oder sonstigen hitzeresistenten Untergründen.

Gegenstand der Erfindung ist auch die Verwendung der erfindungsgemäßen Polyurethanzusammenstzungen als Klebstoffzusammensetzungen für Verklebungen von Metall-, Kunststoff-, Glas-, Holz-, MDF- oder Ledersubstraten oder sonstigen hitzeresistenten Untergründen.

Ebenfalls Gegenstand der Erfindung sind Metallbeschichtungszusammensetzungen, insbesondere für Automobilkarossen, Motor- und Fahrräder, Gebäudeteile und Haushaltsgeräte, Holzbeschichtungszusammensetzungen, MDF-Beschichtungen, Glasbeschichtungszusammensetzungen, Lederbeschichtungszusammensetzungen und Kunststoffbeschichtungszusammensetzungen.

Hochreaktiv bedeutet im Rahmen dieser Erfindung, dass die erfindungsgemäßen Uretdiongruppen haltigen Polyurethanzusammensetzungen bei Temperaturen von 100 bis 160 °C, und zwar je nach Art des Substrats aushärten.

Bevorzugt beträgt diese Aushärtungstemperatur 120 bis 150 °C, besonders bevorzugt von 130 bis 140 °C. Die Zeit zur Aushärtung der erfindungsgemäßen Polyurethanzusammensetzung liegt innerhalb von 5 bis 30 Minuten.

Uretdiongruppen enthaltende Polyisocyanate als Ausgangsverbindungen für die Komponente A) sind wohlbekannt und werden beispielsweise in US 4 476 054, US 4 912 210, US 4 929 724 sowie EP 0 417 603 beschrieben. Ein umfassender Überblick über industriell relevante Verfahren zur Dimerisierung von Isocyanaten zu Uretdionen liefert das J. Prakt. Chem. 336 (1994) 185-200. Im Allgemeinen erfolgt die Umsetzung von Isocyanaten zu Uretdionen in Gegenwart löslicher Dimerisierungskatalysatoren, wie z. B. Dialkylaminopyridinen, Trialkylphosphinen, Phosphorigsäuretriamiden oder Imidazolen. Die Reaktion - optional in Lösemitteln, bevorzugt aber in Abwesenheit von Lösemitteln durchgeführt - wird bei Erreichen eines gewünschten Umsatzes durch Zusatz von Katalysatorgiften abgestoppt. Überschüssiges monomeres Isocyanat wird im Anschluss durch Kurzwegverdampfung abgetrennt. Ist der Katalysator flüchtig genug, kann das Reaktionsgemisch im Zuge der Monomerabtrennung vom Katalysator befreit werden. Auf den Zusatz von Katalysatorgiften kann in diesem Fall verzichtet werden. Grundsätzlich ist zur Herstellung von Uretdiongruppen enthaltenden Polyisocyanaten eine breite Palette von Isocyanaten geeignet. Erfindungsgemäß werden Isophorondiisocyanat (IPDI), Hexamethylendiisocyanat (HDI), 2,2'-Dicyclohexylmethandiisocyanat/ 2,4'- Dicyclohexylmethandiisocyanat, 4,4'-Dlcyclohexylmethandiisocyanat (H₁₂MDI), 2-Methylpentandiisocyanat (MPDI), 2,2,4-Trimethylhexamethylendiisocyanat/2,4,4-Trimethylhexamethylendiisocyanat (TMDI), Norbornandiisocyanat (NBDI), allein oder in Mischungen, enthalten sind. Ganz besonders bevorzugt werden IPDI, H₁₂MDI und HDI.

Die Umsetzung dieser Uretdiongruppen tragenden Polyisocyanate zu Uretdiongruppen aufweisenden Verbindungen (Härter) A) beinhaltet die Reaktion der freien NCO-Gruppen mit Hydroxylgruppen haltigen Monomeren oder Polymeren, wie z. B. Polyestern, Polythioethern, Polyethern, Polycaprolactamen, Polyepoxiden, Polyesteramiden, Polyurethanen oder niedermolekularen Di-, Tri- und/oder Tetraalkoholen als Kettenverlängerer und gegebenenfalls Monoaminen und/oder Monoalkoholen als Kettenabbrecher und wurde schon häufig beschrieben (EP 0 669 353, EP 0 669 354, DE 30 30 572, EP 0 639 598 oder EP 0 803 524). Bevorzugte Uretdiongruppen aufweisende Verbindungen (Härter) A) haben einen freien NCO-Gehalt von weniger als 5 Gew.-% und einen Gehalt an Uretdiongruppen von 2 bis 25 Gew.-% (berechnet als C₂N₂O₂, Molekulargewicht 84), bevorzugt von 6 bis 25 Gew.-%. Bevorzugt als Kettenverlängerer werden Polyester und monomere Dialkohole. Außer den Uretdiongruppen können die Verbindungen (Härter) A) auch Isocyanurat-, Biuret-, Allophanat-, Urethan- und/oder Harnstoff-Strukturen aufweisen.

Die erfindungswesentlichen Katalysatoren B) sind quartemäre Ammoniumacetylacetonats oder Phosphoniumacetylacetonate. Beispiele für solche Katalysatoren sind Tetramethylammoniumacetylacetonat, Tetraethylammoniumacetylacetonat, Tetrapropylammoniumacetylacetonat, Tetrabutylammoniumacetylacetonat, Benzyltrimethylammoniumacetylacetonat, Benzyltriethylammoniumacetylacetonat, Tetramethylphosphoniumacetylacetonat, Tetraethylphosphoniumacetylacetonat, Tetrapropylphosphoniumacetytacetonat, Tetrabutylphosphoniumacetylacetonat, Benzyltrimethylphosphoniumacetylacetonat, Benzyltriethylphosphoniumacetylacetonat.

Selbstverständlich können auch Mischungen solcher Katalysatoren verwendet werden. Die Katalysatoren sind in einer Menge von 0,2 bis 5 Gew.-%, bevorzugt 0,4 bis 3 Gew.-%, bezogen auf die Gesamtmasse der Komponenten, in der Polyurethanzusammensetzung enthalten. Die Katalysatoren können Kristallwasser enthalten, wobei dieses bei der Berechnung der eingesetzten Katalysatorenmenge nicht berücksichtigt wird, d. h. die Wassermenge wird herausgerechnet. Besonders bevorzugt werden Tetraethylammoniumacetylacetonat und Tetrabutylammoniumacetylacetonat eingesetzt.

Eine erfindungsgemäße Variante schließt die polymere Anbindung solcher Katalysatoren B) an die Verbindungen (Härter) A) oder an die Hydroxylgruppen haltigen Polymere C) mit ein. So können z. B. freie Alkohol-, Thio- oder Aminogruppen der Ammoniumsalze mit Säure-, Isocyanat-, oder Glycidylgruppen der Verbindungen (Härter) A) oder Hydroxylgruppen haltige Polymere C) umgesetzt werden, um die Katalysatoren B) in den polymeren Verbund zu integrieren. Außerdem können diese Katalysatoren mit einer inerten Hülle umgeben und damit verkapselt sein.

Bei den Hydroxylgruppen haltigen Polymeren C) werden bevorzugt Polyester, Polyacrylate, Polyurethane, Polyamidamine, Polyether und/oder Polycarbonate mit einer OH-Zahl von 20 bis 500 (in mg KOH/Gramm) eingesetzt. Besonders bevorzugt werden Polyester mit einer OH-Zahl von 30 bis 150, einem mittleren Molekulargewicht von 500 bis 6 000 g/mol und einer Säurezahl von 3 bis 10 mg KOH/g. Solche Bindemittel sind beispielsweise in EP 0 669 354 und EP 0 254 152 beschrieben worden. Solche Polymere können amorph, kristallin oder teilkristallin sein. Selbstverständlich können auch Mischungen solcher Polymere eingesetzt werden.

Reaktive säureabfangende Verbindungen D) sind in der Lackchemie allgemein bekannt. So setzen sich beispielsweise Epoxyverbindungen, Carbodiimide, Hydroxyalkylamide oder 2-Oxazoline, aber auch basische Salze, wie Hydroxide, Hydrogencarbonate oder Carbonate, mit Säuregruppen bei erhöhten Temperaturen um. In Frage kommen dabei z. B. Triglycidyletherisocyanurat (TGIC), EPIKOTE^{®} 828 (Diglycidylether auf Basis Bisphenol A, Shell), Versaticsäureglycidylester, Ethylhexylglycidylether, Butylglycidylether, Polypox R 16 (Pentaerythrittetraglycidylether, UPPC AG) sowie andere Polypoxtypen mit freien Epoxygruppen, Hydroxyalkylamid, (Vestagon EP HA 320, Evonik Degussa GmbH), aber auch Phenylenbisoxazolin, 2-Methyl-2-oxazolin, 2-Hydroxyethyl-2-oxazolin, 2-Hydroxypropyl-2-oxazolin, 5-Hydroxypentyl-2-oxazolin, Natriumcarbonat und Calciumcarbonat. Selbstverständlich kommen auch Mischungen solcher Substanzen in Frage. Bevorzugt werden Epoxyverbindungen. Diese reaktiven Verbindungen können in Gewichtsanteilen von 0,1 bis 10 %, bevorzugt von 0,5 bis 3 %, bezogen auf die Gesamtmasse der Komponenten, eingesetzt werden.

Säuren, die unter E) genannt werden, sind alle Stoffe, fest oder flüssig, organisch oder anorganisch, monomer oder polymer, die die Eigenschaften einer Brönstedt- oder einer Lewissäure besitzen. Als Beispiele seien genannt: Schwefelsäure, Essigsäure, Benzoesäure, Malonsäure, Terephthalsäure, aber auch Copolyester oder Copolyamide mit einer Säurezahl von mindestens 20.

Als Lösemittel unter F) kommen alle flüssigen Substanzen in Frage, die nicht mit anderen Inhaltstoffen reagieren, z. B. Aceton, Ethylacetat, Butylacetat, Xylol, Solvesso 100, Solvesso 150, Methoxypropylacetat und Dibasicester.

Erfindungsgemäß können die in der Lack- bzw. Klebstofftechnologie üblichen Zusatzstoffe G), wie Verlaufsmittel, z. B. Polysilicone oder Acrylate, Lichtschutzmittel, z. B. sterisch gehinderte Amine, oder andere Hilfsmittel, wie sie z. B. in EP 0 669 353 beschrieben wurden, in einer Gesamtmenge von 0,05 bis 5 Gew.-% zugesetzt werden. Füllstoffe und Pigmente wie z. B. Titandioxid können in einer Menge bis zu 50 Gew.-% der Gesamtzusammensetzung zugesetzt werden.

Die Homogenisierung aller Bestandteile zur Herstellung der erfindungsgemäßen Polyurethanzusammensetzung kann in geeigneten Aggregaten, wie z. B. beheizbaren Rührkesseln, Knetern oder auch Extrudern, erfolgen, wobei Temperaturobergrenzen von 120 bis 130 °C nicht überschritten werden sollten. Die gut vermischte Masse wird durch geeignete Auftragung, z. B. Walzen, Sprühen, Spritzen, Tauchen, Rakeln, auf das Substrat aufgebracht. Nach dem Auftrag werden die beschichteten Werkstücke zur Aushärtung 4 bis 60 Minuten auf eine Temperatur von 60 bis 220 °C, vorzugsweise 6 bis 30 Minuten bei 80 bis 160 °C erhitzt.

Nachfolgend wird der Gegenstand der Erfindung anhand von Beispielen näher erläutert.

### Beispiele:

### 1. Einsatzstoffe

| **Einsatzstoffe** | **Produktbeschreibung, Hersteller** |
|---|---|
| VESTAGON BF 9030 | Komponente A), Evonik Degussa GmbH, Coatings & Colorants, Uretdion-Gehalt: 12,4 %, Erweichungspunkt: 74 - 75 °C, Tg: 40 - 50 °C |
| TBAHS | Tetrabutylammoniumhydrogensulfat, Aldrich |
| ARALDIT PT912 | Komponente D), Säurefänger, Huntsman |
| CRYLCOAT 2939 | Komponente C), Polyester, OHZ 52 mg KOH/g, Tg 54 °C, SZ: 3,1 mg KOH/g, Cytec |
| Benzoin | Entgasungsmittel, Aldrich |
| KRONOS 2160 | Titandioxid, Kronos |
| RESIFLOW PV 88 | Verlaufsmittel, Worlee |

| | |
|---|---|
| Tg: Glasübergangspunkt; OHZ: OH-Zahl, SZ: Säurezahl | |

### 2. Herstellung des Katalysators Tetrabutylammoniumacetylacetonat (TBAacac) nach Literaturvorschrift (Tetrahedron, 30, (1974), pp 93-104)

25 g Acetylaceton werden in 100 ml Dichlormethan gelöst und eine Lösung aus 20 g NaOH, und 85 g TBAHS in 250 ml Wasser hinzugegeben. Diese Mischung wird im Schüttelrichter gegeben und kräftig geschüttelt. Die organische Phase wird abgetrennt und über Natriumsulfat getrocknet. Nach Abzug des Lösungsmittels wird das Produkt mit kaltem Aceton gewaschen und Vakuumtrockenschrank bei 40 °C getrocknet. Es resultiert ein gelblicher Feststoff mit einem Schmelzpunkt von 148 °C (Lit.: 150 °C).

### 3. Reine Polyurethan-Grundzusammensetzungen

(Angaben in Gew.-%):

| **Beispiele** | **VESTAGON BF 9030** | **TBAacac** |
|---|---|---|
| 1 | 98,5 | 1,5 |
| 2* | 100 | - |

| | | |
|---|---|---|
| * nicht erfindungsgemäßes Vergleichsbeispiel | | |

98,5 g Vestagon BF 9030 werden in 300 ml Aceton gelöst und mit 1,5 g TBAacac versetzt. Das Lösemittel wird am Rotationsverdampfer abgezogen und der Feststoff gemahlen und auf eine Korngröße von < 100 µm abgesiebt. Danach wird das Pulver elektrostatisch auf ein Normalstahlblech aufgesprüht und bei 30 min 150 °C ausgehärtet. Zum Vergleich wird die gleiche Prozedur mit reinem Vestagon BF 9030 durchgeführt.

| **Beispiele** | **MEK-Test** | **Pendelhärte** | **Bemerkung** |
|---|---|---|---|
| 1 | >100 | 185 | ausgehärtet |
| 2* | 3 | Nicht messbar | nicht ausgehärtet |

| | | | |
|---|---|---|---|
| * nicht erfindungsgemäßes Vergleichsbeispiel | | | |

Beispiel 1 ist vollständig ausgehärtet. Das Vergleichsbeispiel 2* ist nicht ausgehärtet.

### 4. Pulverlack

(Angaben in Gew.-%)

| **Beispiele** | **VESTAGON BF 9030** | **CRYLCOAT 2839** | **PT 912** | **TBAacac** |
|---|---|---|---|---|
| 3 | 25,20 | 41,10 | 1,5 | 0,7 |
| 4* | 24,95 | 40,65 | 1,5 | - |

| | | | | |
|---|---|---|---|---|
| * nicht erfindungsgemäßes Vergleichsbeispiel | | | | |

Beispiele 3 und 4 enthielten jeweils noch 0,5 % Benzoin, 1,0 % Gew.-% RESIFLOW PV 88 und 30,0 Gew.-% KRONOS 2160.

Beispiele 3 und 4 wurden elektrostatisch auf Stahlbleche aufgesprüht und 30 min auf 130 °C aufgeheizt.

| **Beispiele** | **MEK-Test** | **Kugelschlag dir/rev [inch* Ibs]** | **Tiefung [mm]** | **Bemerkung** |
|---|---|---|---|---|
| 3 | > 100 | 160/160 | >10 | ausgehärtet |
| 4* | 7 | 20/>10 | 0,5 | Nicht ausgehärtet |

| | | | | |
|---|---|---|---|---|
| * nicht erfindungsgemäßes Vergleichsbeispiel | | | | |

Beispiel 3 ist vollständig ausgehärtet und weist gute lacktechnische Mechaniken auf. Das Vergleichsbeispiel 4* ist gar nicht ausgehärtet.

## Patentansprüche

1. Uretdiongruppen haltige Polyurethanzusammensetzungen, enthaltend
A) mindestens eine Uretdiongruppen haltige Verbindung, basierend auf aliphatischen, (cyclo)aliphatischen und/oder cycloaliphatischen Polyisocyanaten und Hydroxylgruppen haltigen Verbindungen, mit einem freien NCO-Gehalt von kleiner 5 Gew.-% und einem Uretdiongehalt von 2 bis 25 Gew.-% in einer Menge von 5 bis 99 Gew.-% bezogen auf die Gesamtmasse der Komponenten
und
B) mindestens einen Katalysator ausgewählt aus einem quarternären Ammoniumacetylacetonat und/oder Phosphoniumacetylacetonat, in einer Menge von 0,2 bis 5 Gew.-% bezogen auf die Gesamtmasse der Komponenten.

2. Uretdiongruppen haltige Polyurethanzusammensetzungen nach Anspruch 1,
**dadurch gekennzeichnet,**
**dass** diese zusätzlich mindestens eine Komponente ausgewählt aus
C) ein Hydroxylgruppen haltiges Polymer mit einer OH-Zahl zwischen 20 und 500 KOH/Gramm in einer Menge von 1 bis 90 Gew.-% bezogen auf die Gesamtmasse der Komponenten;
D) mindestens eine gegenüber Säuregruppen reaktive Verbindung mit einem Gewichtsanteil, bezogen auf die Gesamtmasse der Komponenten, von 0,1 bis 10 %;
E) mindestens eine Säure in monomerer oder polymerer Form in einem Gewichtsanteil, bezogen auf die Gesamtmasse der Komponenten, von 0,1 bis 10%:
F) Lösemittel;
G) Hilfs- und Zusatzstoffe,
enthalten.

3. Uretdiongruppen haltige Polyurethanzusammensetzungen nach mindestens einem der vorherigen Ansprüche
**dadurch gekennzeichnet,**
**dass** Uretdiongruppen aufweisende Verbindungen A) auf Basis von Isophorondiisocyanat (IPDI), Hexamethylendiisocyanat (HDI), 2,2'-Dicyclohexylmethandiisocyanat, 2,4'-Dicyclohexylmethandiisocyanat/ 4,4'-Dicyclohexylmethandiisocyanat (H₁₂MDI), 2-Methytpentandiisocyanat (MPDI), 2,2,4-Trimethylhexamethylendiisocyanat/2,4,4-Trimethylhexamethylendiisocyanat (TMDI), Norbornandiisocyanat (NBDI), allein oder in Mischungen, enthalten sind.

4. Uretdiongruppen haltige Polyurethanzusammensetzungen nach Anspruch 3,
**dadurch gekennzeichnet,**
**dass** Uretdiongruppen aufweisende Verbindungen A) auf Basis von IPDI, 4,4'-H₁₂MDI und/oder HDI enthalten sind.

5. Uretdiongruppen haltige Polyurethanzusammensetzungen nach mindestens einem der vorherigen Ansprüche,
**dadurch gekennzeichnet,**
**dass** Uretdiongruppen aufweisende Verbindungen A) auf Basis hydroxylgruppenhaltiger Polyester, Polythioether, Polyether, Polycaprolactone, Polyepoxide, Polyesteramide, Polyurethane, niedermolekularer Di-, Tri- und/oder Tetraalkohole, Monoamine und/oder Monoalkohole, allein oder in Mischungen, enthalten sind.

6. Uretdiongruppen haltige Polyurethanzusammensetzungen nach Anspruch 5,
**dadurch gekennzeichnet,**
**dass** Polyester und/oder monomere Dialkohole enthalten sind.

7. Uretdiongruppen haltige Polyurethanzusammensetzungen, nach mindestens einem der vorherigen Ansprüche
**dadurch gekennzeichnet,**
**dass** als Katalysatoren B) Verbindungen ausgewählt aus Tetramethylammoniumacetylacetonat, Tetraethylammoniumacetylacetonat, Tetrapropylammoniumacetylacetonat, Tetrabutylammoniumacetylacetonat, Benzyltrimethylammoniumacetylacetonat, Benzyltriethylammoniumacetylacetonat, Tetramethylphosphoniumacetylacetonat, Tetraethylphosphoniumacetylacetonat, Tetrapropylphosphoniumacetylacetonat, Tetrabutylphosphoniumacetylacetonat, Benzyltrimethylphosphoniumacetylacetonat, Benzyltriethylphosphoniumacetylacetonat, allein oder in Mischungen enthalten sind.

8. Uretdiongruppen haltige Polyurethanzusammensetzungen nach Anspruch 7,
**dadurch gekennzeichnet,**
**dass** Tetraethylammoniumacetylacetonat und/oder Tetrabutylammoniumacetylacetonat enthalten sind.

9. Uretdiongruppen haltige Polyurethanzusammensetzungen, nach mindestens einem der vorherigen Ansprüche
**dadurch gekennzeichnet,**
**dass** Polymere C) ausgewählt aus Polyester, Polyacrylate, Polyurethane, Polyamidamine, Polyether und/oder Polycarbonate mit einer OH-Zahl von 20 bis 500 (in mg KOH/Gramm), allein oder in Mischungen, enthalten sind.

10. Uretdiongruppen haltige Polyurethanzusammensetzungen, nach mindestens einem der vorherigen Ansprüche
**dadurch gekennzeichnet,**
**dass** als Polymere C) Polyester mit einer OH-Zahl von 30 bis 150, einem mittleren Molekulargewicht von 500 bis 6000 g/mol enthalten sind.

11. Uretdiongruppen haltige Polyurethanzusammensetzungen nach mindestens einem der vorherigen Ansprüche,
**dadurch gekennzeichnet,**
**dass** als Komponente D) Epoxyverbindungen, Carbodiimide, Hydroxyalkylamide, basische 2-Oxazoline und/oder Salze enthalten sind.

12. Uretiongruppen haltige Polyurethanzusammensetzungen nach mindestens einem der vorherigen Ansprüche,
**dadurch gekennzeichnet,**
**dass** als Säure E) Schwefelsäure, Essigsäure, Benzoesäure, Malonsäure, Terephthalsäure, aber auch Copolyester oder Copolyamide mit einer Säurezahl von mindestens 20 enthalten sind.

13. Verfahren zur Herstellung von Uretdiongruppen haltigen
Polyurethanzusammensetzungen nach mindestens einem der Ansprüche 1 bis 12, in beheizbaren Aggregaten bei Temperaturen unterhalb von 130 °C.

14. Verwendung von Uretdiongruppen haltigen Polyurethanzusammensetzungen nach mindestens einem der Ansprüche 1 bis 12 zur Herstellung von Lack- und Klebstoffzusammensetzungen.

15. Verwendung von Uretdiongruppen haltigen Polyurethanzusammensetzungen nach mindestens einem der Ansprüche 1 bis 12 zur Herstellung von Lack- und Klebstoffzusammensetzungen für Metall, Kunststoff, Holz, Glas, MDF, Leder oder sonstige hitzeresistente Untergründe.

16. Metallbeschichtungszusammensetzungen, enthaltend eine Uretdiongruppen haltige Polyurethanzusammensetzung nach mindestens einem der Ansprüche 1 bis 12.

17. Holzbeschichtungszusammensetzung, enthaltend eine Uretdiongruppen haltige Polyurethanzusammensetzung nach mindestens einem der Ansprüche 1 bis 12.

18. Lederbeschichtungszusammensetzungen, enthaltend eine Uretdiongruppen haltige Polyurethanzusammensetzung nach mindestens einem der Ansprüche 1 bis 12.

19. Kunststoftbeschichtungszusammensetzungen, enthaltend eine Uretdiongruppen haltige Polyurethanzusammensetzung nach mindestens einem der Ansprüche 1 bis 12.

## Claims

1. A polyurethane composition containing uretdione groups, containing
A) at least one compound which contains uretdione groups, based on aliphatic, (cycle)aliphatic and/or cycloaliphatic polyisocyanates and hydroxyl-containing compounds, having a free NCO content of less than 5% by weight and a uretdione content of 2% to 25% by weight, in an amount of 5% to 99% by weight, based on the total mass of the components
and
B) at least one catalyst selected from a quaternary ammonium acetylacetonate and/or phosphonium acetylacetonate, in an amount of 0.2% to 5% by weight, based on the total mass of the components.

2. A polyurethane composition containing uretdione groups according to claim 1, **characterized in that** it further comprises at least one component selected from
C) a hydroxyl-containing polymer having an OH number of between 20 and 500 KOH/gram, in an amount of 1% to 90% by weight, based on the total mass of the components;
D) at least one compound which is reactive towards acid groups, with a weight fraction, based on the total mass of the components, of 0.1% to 10%;
E) at least one acid in monomeric or polymeric form, in a weight fraction, based on the total mass of the components, of 0.1% to 10%;
F) solvents;
G) auxiliaries and additives.

3. A polyurethane composition containing uretdione groups according to at least one of the preceding claims, **characterized in that** compounds A), containing uretdione groups, based on isophorone diisocyanate (IPDI), hexamethylene diisocyanate (HDI), 2,2'-dicyclohexylmethane diisocyanate, 2,4'-dicyclohexyl-methane diisocyanate/4,4'-dicyclohexylmethane diisocyanate (H₁₂MDI), 2-methylpentane diisocyanate (MPDI), 2,2,4-trimethylhexamethylene diisocyanate/2,4,4-trimethylhexamethylene diisocyanate (TMDI), norbornane diisocyanate (NBDI), alone or in mixtures, are present.

4. A polyurethane composition containing uretdione groups according to claim 3, **characterized in that** compounds A), containing uretdione groups, based on IPDI, 4,4'-H₁₂MDI and/or HDI are present.

5. A polyurethane composition containing uretdione groups according to at least one of the preceding claims, **characterized in that** compounds A), containing uretdione groups, based on hydroxyl-containing polyesters, polythioethers, polyethers, polycaproplactones, polyepoxides, polyesteramides, polyurethanes, low molecular mass di, tri- and/or tetraalcohols, monoamines and/or monoalcohols, alone or in mixtures, are present.

6. A polyurethane composition containing uretdione groups according to claim 5, **characterized in that** polyesters and/or monomeric dialcohols are present.

7. A polyurethane composition containing uretdione groups according to at least one of the preceding claims, **characterized in that** catalysts B) present are compounds selected from tetramethylammonium acetylacetonate, tetraethylammonium acetylacetonate, tetrapropylammonium acetylacetonate, tetrabutylammonium acetylacetonate, benzyltrimethylammonium acetylacetonate, benzyltriethylammonium acetylacetonate, tetramethylphosphonium acetylacetonate, tetraethylphosphonium acetylacetonate, tetrapropylphosphonium acetylacetonate, tetrabutylphosphonium acetylacetonate, benzyltrimethylphosphonium acetylacetonate, benzyltriethylphosphonium acetylacetonate, alone or in mixtures.

8. A polyurethane composition containing uretdione groups according to claim 7, **characterized in that** tetraethylammonium acetylacetonate and/or tetrabutylammonium acetylacetonate are present.

9. A polyurethane composition containing uretdione groups according to at least one of the preceding claims, **characterized in that** polymers C) selected from polyesters, polyacrylates, polyurethanes, polyamideamines, polyethers and/or polycarbonates having an OH number of 20 to 500 (in mg KOH/gram), alone or in mixtures, are present.

10. A polyurethane composition containing uretdione groups according to at least one of the preceding claims, **characterized in that** polymers C) present are polyesters having an OH number of 30 to 150, an average molecular weight of 500 to 6000 g/mol.

11. A polyurethane composition containing uretdione groups according to at least one of the preceding claims, **characterized in that** epoxy compounds, carbodiimides, hydroxyalkylamides, basic 2-oxazolines and/or salts are present as component D) .

12. A polyurethane composition containing uretdione groups according to at least one of the preceding claims, **characterized in that** sulphuric acid, acetic acid, benzoic acid, malonic acid, terephthalic acid, but also copolyesters or copolyamides having an acid number of at least 20, are present as acid E).

13. A process for preparing a polyurethane composition containing uretdione groups according to at least one of claims 1 to 12 in a heatable assembly at a temperature below 130°C.

14. The use of a polyurethane composition containing uretdione groups according to at least one of claims 1 to 12 for producing a coating composition or adhesive composition.

15. The use of a polyurethane composition containing uretdione groups according to at least one of claims 1 to 12 for producing a coating composition or adhesive composition for metal, plastic, wood, glass, MDF, leather or other heat-resistant substrates.

16. A metal-coating composition comprising a polyurethane composition containing uretdione groups according to at least one of claims 1 to 12.

17. A wood-coating composition comprising a polyurethane composition containing uretdione groups according to at least one of claims 1 to 12.

18. A leather-coating composition comprising a polyurethane composition containing uretdione groups according to at least one of claims 1 to 12.

19. A plastic-coating composition comprising a polyurethane composition containing uretdione groups according to at least one of claims 1 to 12.

## Revendications

1. Compositions de polyuréthane contenant des groupes uretdione, contenant
A) au moins un composé contenant des groupes uretdione, à base de polyisocyanates aliphatiques, (cycle)aliphatiques et/ou cycloaliphatiques et de composés contenant des groupes hydroxyle, ayant une teneur en NCO libre inférieure à 5 % en poids et une teneur en uretdione de 2 à 25 % en poids, en une quantité de 5 à 99 % en poids, par rapport à la masse totale des composants,
et
B) au moins un catalyseur choisi parmi un acétylacétonate d'ammonium et/ou acétylacétonate de phosphonium quaternaire, en une quantité de 0,2 à 5 % en poids, par rapport à la masse totale des composants.

2. Compositions de polyuréthane contenant des groupes uretdione selon la revendication 1, **caractérisées en ce que** celles-ci contiennent également au moins un composant choisi parmi
C) un polymère contenant des groupes hydroxyle ayant un indice OH compris entre 20 et 500 KOH/gramme en une quantité de 1 à 90 % en poids, par rapport à la masse totale des composants ;
D) au moins un composé réactif avec les groupes acides en une proportion en poids, par rapport à la masse totale des composants, de 0,1 à 10 % ;
E) au moins un acide sous forme monomère ou polymère en une proportion en poids, par rapport à la masse totale des composants, de 0,1 à 10 % ;
F) des solvants ;
G) des adjuvants et additifs.

3. Compositions de polyuréthane contenant des groupes uretdione selon au moins l'une quelconque des revendications précédentes, **caractérisées en ce que** des composés comprenant des groupes uretdione A) à base de diisocyanate d'isophorone (IPDI), de diisocyanate d'hexaméthylène (HDI), de diisocyanate de 2,2'-dicyclohexylméthane, de diisocyanate de 2,4'-dicyclohexylméthane/diisocyanate de 4,4'-dicyclohexylméthane (H₁₂MDI), de diisocyanate de 2-méthylpentane (MPDI), de diisocyanate de 2,2,4-triméthylhexaméthylène/diisocyanate de 2,4,4-triméthylhexaméthylène (TMDI), de diisocyanate de norbornane (NBDI), seuls ou en mélanges, sont contenus.

4. Compositions de polyuréthane contenant des groupes uretdione selon la revendication 3, **caractérisées en ce que** des composés comprenant des groupes uretdione A) à base d'IPDI, de 4,4'-H₁₂MDI et/ou d'HDI sont contenus.

5. Compositions de polyuréthane contenant des groupes uretdione selon au moins l'une quelconque des revendications précédentes, **caractérisées en ce que** des composés comprenant des groupes uretdione A) à base de polyesters, polythioéthers, polyéthers, polycaprolactones, polyépoxydes, polyesteramides, polyuréthanes, di-, tri- et/ou tétraalcools de poids moléculaire faible, monoamines et/ou monoalcools contenant des groupes hydroxyle, seuls ou en mélanges, sont contenus.

6. Compositions de polyuréthane contenant des groupes uretdione selon la revendication 5, **caractérisées en ce que** des polyesters et/ou des dialcools monomères sont contenus.

7. Compositions de polyuréthane contenant des groupes uretdione selon au moins l'une quelconque des revendications précédentes, **caractérisées en ce que** des composés choisis parmi l'acétylacétonate de tétraméthylammonium, l'acétylacétonate de tétraéthylammonium, l'acétylacétonate de tétrapropylammonium, l'acétylacétonate de tétrabutylammonium, l'acétylacétonate de benzyltriméthylammonium, l'acétylacétonate de benzyltriéthylammonium, l'acétylacétonate de tétraméthylphosphonium, l'acétylacétonate de tétraéthylphosphonium, l'acétylacétonate de tétrapropylphosphonium, l'acétylacétonate de tétrabutylphosphonium, l'acétylacétonate de benzyltriméthylphosphonium, l'acétylacétonate de benzyltriéthylphosphonium, seuls ou en mélanges, sont contenus en tant que catalyseurs B).

8. Compositions de polyuréthane contenant des groupes uretdione selon la revendication 7, **caractérisées en ce que** de l'acétylacétonate de tétraéthylammonium et/ou de l'acétylacétonate de tétrabutylammonium sont contenus.

9. Compositions de polyuréthane contenant des groupes uretdione selon au moins l'une quelconque des revendications précédentes, **caractérisées en ce que** des polymères C) choisis parmi les polyesters, les polyacrylates, les polyuréthanes, les polyamide-amines, les polyéthers et/ou les polycarbonates ayant un indice OH de 20 à 500 (en mg de KOH/gramme), seuls ou en mélanges, sont contenus.

10. Compositions de polyuréthane contenant des groupes uretdione selon au moins l'une quelconque des revendications précédentes, **caractérisées en ce que** des polyesters ayant un indice OH de 30 à 150, un poids moléculaire moyen de 500 à 6 000 g/mol, sont contenus en tant que polymères C).

11. Compositions de polyuréthane contenant des groupes uretdione selon au moins l'une quelconque des revendications précédentes, **caractérisées en ce que** des composés époxy, des carbodiimides, des hydroxyalkylamides, des 2-oxazolines basiques et/ou des sels sont contenus en tant que composant D).

12. Compositions de polyuréthane contenant des groupes uretdione selon au moins l'une quelconque des revendications précédentes, **caractérisées en ce que** de l'acide sulfurique, de l'acide acétique, de l'acide benzoïque, de l'acide malonique, de l'acide téréphtalique, mais également des copolyesters ou copolyamides ayant un indice d'acidité d'au moins 20, sont contenus en tant qu'acide E).

13. Procédé de fabrication de compositions de polyuréthane contenant des groupes uretdione selon au moins l'une quelconque des revendications 1 à 12, dans des appareils chauffants à des températures inférieures à 130 °C.

14. Utilisation de compositions de polyuréthane contenant des groupes uretdione selon au moins l'une quelconque des revendications 1 à 12 pour la fabrication de compositions de laque et d'adhésif.

15. Utilisation de compositions de polyuréthane contenant des groupes uretdione selon au moins l'une quelconque des revendications 1 à 12 pour la fabrication de compositions de laque et d'adhésif pour métal, plastique, bois, verre, MDF, cuir ou autres substrats résistants à la chaleur.

16. Compositions de revêtement de métaux, contenant une composition de polyuréthane contenant des groupes uretdione selon au moins l'une quelconque des revendications 1 à 12.

17. Composition de revêtement de bois, contenant une composition de polyuréthane contenant des groupes uretdione selon au moins l'une quelconque des revendications 1 à 12.

18. Compositions de revêtement de cuir, contenant une composition de polyuréthane contenant des groupes uretdione selon au moins l'une quelconque des revendications 1 à 12.

19. Compositions de revêtement de plastique, contenant une composition de polyuréthane contenant des groupes uretdione selon au moins l'une quelconque des revendications 1 à 12.
